# EUROPEAN PATENT APPLICATION

(11) **EP 2 801 500 A1**
(43) Date of publication of application: **12.11.2014**
(21) Application number: 14163560.7
(22) Date of filing: 04.04.2014
(51) Int. Cl.: B60R 21/2165

(54) **Automobile airbag door**

(30) Priority: 09.05.2013 JP 2013099457
(71) Applicant: Toyoda Gosei Co., Ltd., Kiyosu-shi Aichi 452-8564 (JP)
(72) Inventor: Fujita, Junichi, Kiyosu-shi, Aichi 452-8564 (JP); Nagata, Takeshi, Kiyosu-shi, Aichi 452-8564 (JP); Asakuma, Shunta, Kiyosu-shi, Aichi 452-8564 (JP); Totani, Chiharu, Kiyosu-shi, Aichi 452-8564 (JP)
(74) Representative: Kramer - Barske - Schmidtchen

(57) **Abstract**

An automobile airbag door includes a base member 21, a three-dimensionally knitted inner cushion layer 23, which is arranged on one side of the base member, and a covering 25 arranged on a side of the base member opposite to the inner cushion layer. The base member and the inner cushion layer each have a plurality of cleavage grooves 22,24, which serve as starting points of breaking action when the airbag door is pressed by the airbag being deployed and inflated. An outer cushion layer 26 is located between the inner cushion layer and the covering.

## Description

### BACKGROUND OF THE INVENTION

The present invention relates to an automobile airbag door that is opened when broken by pressing force of an airbag being deployed and inflated.

In an automobile, a front passenger seat airbag apparatus is effective as a means for protecting an occupant on a front passenger seat. A front passenger seat airbag apparatus uses, as an airbag door, a part of the instrument panel arranged in front of the front passenger seat of the automobile.

For example, Japanese National Phase Laid-Open Patent Publication No. 2005-537164 discloses one example of an airbag door that includes a base member, a three-dimensionally knitted cushion layer arranged on one side of the base member, and a covering arranged on a side of the base member opposite to the cushion layer. In the airbag door, the base member is used as a core member, and the three-dimensionally knitted cushion layer is used for giving elasticity to the airbag door to improve the tactile sensation. The covering is used for improving the texture and the tactile sensation.

To initiate breaking of the airbag door, which leads to an opening action, the airbag door has a tear line (a breakable line), which is formed by a plurality of short cleavage grooves or a single elongated cleavage groove. The tear line allows the airbag door to be smoothly opened and the airbag to be smoothly deployed and inflated. To be inconspicuous from the surface of the airbag door, the tear line is formed on the back side of the airbag door. For example, the tear line is formed in the base member and the three-dimensionally knitted cushion layer. Some airbag doors are provided with a tear line formed in the back side of the covering.

When the automobile receives an impact from the front, for example, due to a frontal collision, and the airbag is deployed and inflated, the pressing force of the airbag acts on the base member and the three-dimensionally knitted cushion layer, which are then broken along the respective tear lines. The covering is also broken, so that the airbag door is opened. The airbag passes through the opened part of the airbag door to be deployed and inflated between the instrument panel and the occupant seated in the front passenger seat, thereby reducing the impact applied to the occupant from the front.

However, in the hot summer sun, the temperature in the passenger compartment is high. The heat affects the instrument panel having the airbag door, resulting in dents at a part of the covering corresponding to the cleavage grooves. The dents appear as marks corresponding to the cleavage grooves from the surface of the automobile airbag door. When touched from the surface of the automobile airbag door, the dents give off a tactile sensation different from that of the remaining part.

### SUMMARY OF THE INVENTION

Accordingly, it is an objective of the present invention to provide an automobile airbag door that improves the appearance and the tactile sensation of the covering under high temperature.

To achieve the foregoing objective and in accordance with one aspect of the present invention, an automobile airbag door, which is designed to be broken by an airbag being deployed and inflated, is provided. The airbag door includes a base member having two sides, a three-dimensionally knitted inner cushion layer, which is arranged on one of the sides of the base member, a covering arranged on the side of the base member opposite to the inner cushion layer, a plurality of cleavage grooves formed in the base member and the inner cushion layer, and an outer cushion layer. The cleavage grooves serve as starting points of breaking action when the airbag door is pressed by the airbag being deployed and inflated. The outer cushion layer is located between the inner cushion layer and the covering.

According to the above described configuration, in the automobile airbag door, the base member functions as a core member. The three-dimensionally knitted inner cushion layer and the outer cushion layer improve the tactile sensation with the elasticity thereof. The covering mainly improves the texture and the tactile sensation.

Being located between the three-dimensionally knitted inner cushion layer and the covering, the outer cushion layer distances the covering from the inner cushion layer. When receiving force, the outer cushion layer is capable of being elastically deformed in accordance with the force. Therefore, when the temperature in the passenger compartment is raised, for example, in the hot summer sun, and the automobile airbag door, particularly, the three-dimensionally knitted inner cushion layer is affected by the heat, the influence is blocked by the outer cushion layer, which is capable of being elastically deformed. The influence is thus unlikely to reach the covering. In the covering, the part that corresponds to the cleavage grooves of the three-dimensionally inner cushion layer is not likely to be dented, and the appearance of the covering is maintained at a favorable level. Since dents are not likely to be formed in the covering, the covering gives off the same tactile sensation when touched either at the part corresponding to the cleavage grooves or parts not corresponding to the cleavage grooves. Accordingly, the tactile sensation of the covering is maintained at a favorable level.

The automobile airbag door is broken when pressed by the airbag being deployed and inflated. At this time, the cleavage grooves, which are formed in the base member and the three-dimensionally knitted inner cushion layer, serve as the starting points of the breaking. The base member and the three-dimensionally knitted inner cushion layer are broken along the cleavage grooves. The outer cushion layer and the covering are broken along the cleavage grooves at the part corresponding to the cleavage grooves. Accordingly, the automobile airbag door is opened, so that the airbag passes through the opened portion and is deployed and inflated in front of the occupant to reduce the impact applied to the occupant.

In the above described automobile airbag door, the outer cushion layer is preferably made of a harder material than that of the three-dimensionally knitted inner cushion layer.

In a case in which the outer cushion layer is not provided, if the automobile airbag door is pressed from the covering, the load increases as the displacement increases in a range of small displacement. However, in a range where the displacement is greater than or equal to a certain level, the degree of increase in the load is attenuated. The attenuation is considered to be caused by the space inside the three-dimensionally knitted inner cushion layer. That is, when the three-dimensionally knitted inner cushion layer is being deformed in a superficial portion, the load increases as the displacement increases. However, when the deformation reaches the internal space, an increase in the displacement does not significantly change the load.

In contrast, if an outer cushion layer that is harder than the three-dimensionally knitted inner cushion layer is provided, the load increases as the displacement increases. This tendency is observed over a wide range of displacement. Further, the load is greater than that in the case in which no outer cushion layer is provided. That is, in addition to the fact that the outer cushion layer is harder than the three-dimensionally knitted inner cushion layer, the outer cushion layer is located between the three-dimensionally knitted inner cushion layer and the covering. Thus, the above described property of the internal space of the three-dimensionally knitted inner cushion layer is considered to be canceled by the property of the outer cushion layer.

In this manner, when the airbag door is pressed from the covering, the load increases as the displacement increases in a wide range of displacement. This provides a more natural tactile sensation.

In the above described automobile airbag door, the covering preferably has an anisotropy in the tensile strength along the surface of the covering, and the covering is preferably laminated onto the outer cushion layer such that the direction of the smallest tensile strength of the covering is perpendicular to the direction in which the cleavage groove designed to be broken first among the cleavage grooves extends.

With this configuration, the tensile strength of the covering is set to be the smallest along a line perpendicular to the direction in which the cleavage groove that is designed to be broken first among the cleavage grooves extends. This allows the corresponding part of the covering to be easily broken by the pressing force of the airbag being deployed and inflated. The tensile strength of the covering in directions other than the direction perpendicular to the extending direction of the cleavage groove designed to be broken first among the cleavage grooves is relatively high so that the strength of the covering is maintained at a favorable level.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a diagram of an automobile airbag door according to one embodiment, showing a perspective view of an instrument panel in which a front passenger seat airbag apparatus is mounted;
Fig. 2 is a schematic plan view showing a state of the front passenger seat airbag apparatus, in which the airbag is inflated and deployed to protect an occupant in a front passenger seat;
Fig. 3(a) is a partial cross-sectional view schematically showing the structure of the front passenger seat airbag apparatus, with a focus on the automobile airbag door;
Fig. 3(b) is an enlarged cross-sectional view illustrating a part of Fig. 3(a);
Fig. 4 is a diagram showing the anisotropy in the tensile strength of the covering;
Fig. 5 is a partial plan view showing the relationship between the cleavage grooves of the automobile airbag door and the tensile strength of the covering;
Figs. 6(a) to 6(c) are partial cross-sectional views illustrating steps for manufacturing the automobile airbag door;
Fig. 7 is a graph showing, regarding the embodiment and a comparison example, the relationship between the displacement of the automobile airbag door and the load when the airbag door is pressed; and
Fig. 8 is a partial plan view of a modification of a tear line, showing the relationship between cleavage grooves and anisotropy of a covering in an automobile airbag door.

### DETAILED DESCRIPTION OF THE PREFERRED EMBODIMENTS

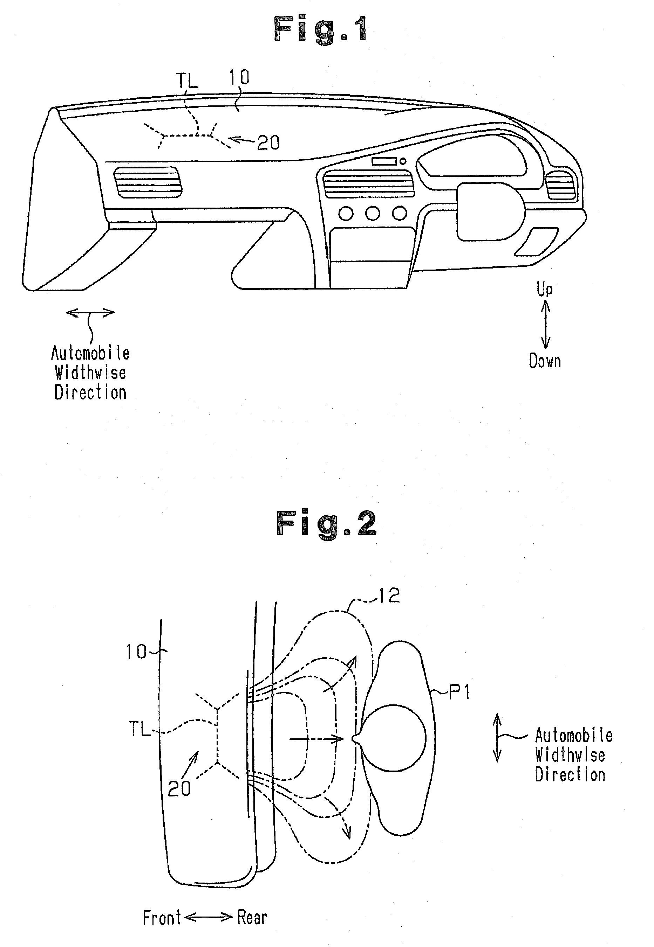

An automobile airbag door according to one embodiment of the present invention will now be described with reference to Figs. 1 to 7. As shown in Figs. 1 and 2, an automobile includes an instrument panel 10, which extends along the width of the automobile and is arranged in front of the driver's seat and the front passenger seat.

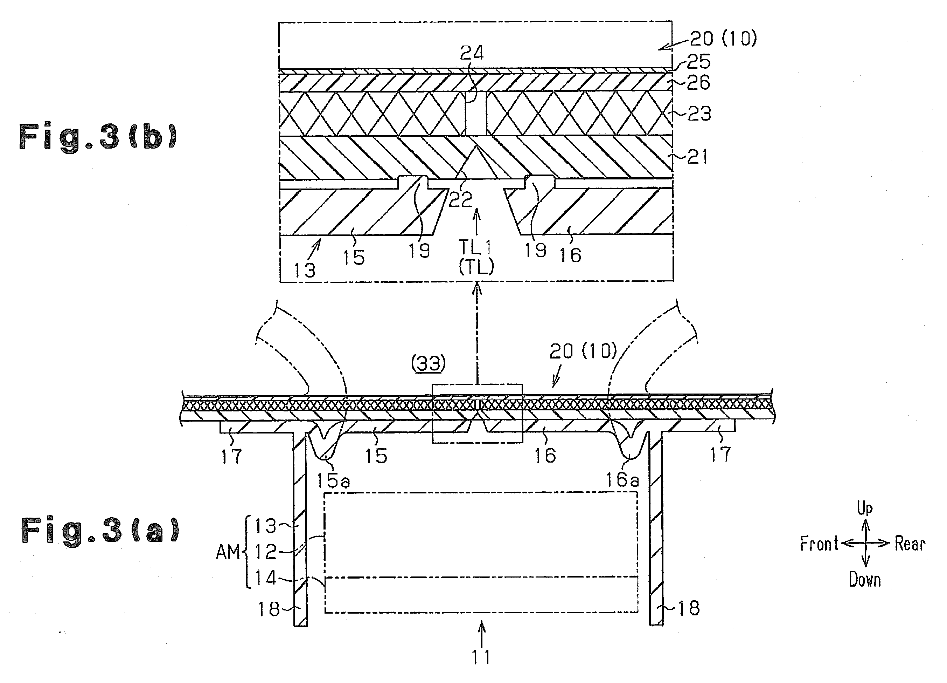

The automobile has a front passenger seat airbag apparatus 11, which inflates and deploys an airbag 12 in front of an occupant P1 seated in the front passenger seat to protect the occupant P1 from an impact when the impact is applied from the front. As shown in Fig. 3(a), the front passenger seat airbag apparatus 11 has an automobile airbag door (hereinafter, simply referred to as an airbag door) 20, which is formed in a part of the instrument panel 10, and an airbag module AM, which is located on the back (on the lower side as viewed in Fig. 3(a)) of the airbag door 20. The airbag module AM includes the airbag 12, which is inflated and deployed by inflation gas. When the front passenger seat airbag apparatus 11 is activated, the airbag door 20 is pressed by the airbag 12 being deployed and inflated to be opened toward the front passenger seat and defines an opening 33, which allows the airbag 12 to be deployed.

Next, the basic structure of the airbag door 20 will be described.

As shown in Fig. 3(b), the airbag door 20 includes a base member 21 as a core member, a three-dimensionally knitted inner cushion layer 23 arranged on one side of the base member 21 (the upper side as viewed in Fig. 3(b)), a covering 25 arranged on a side of the inner cushion layer 23 that is opposite to the base member 21 (the upper side as viewed in Fig. 3(b)).

The base member 21 is made of thermoplastic olefin (TPO) by injection molding. The base member 21 has a thickness of 2.5 to 3.5 mm. The base member 21 may be made of any plastic other than TPO. For example, the base member 21 may be made of polypropylene.

The three-dimensionally knitted inner cushion layer 23 is used for improving the tactile sensation of the airbag door 20. For example, the inner cushion layer 23 is formed using a double-raschel machine. Specifically, the inner cushion layer 23 is knitted by shuttling a connecting strand between two fabrics spaced at a predetermined distance. The three-dimensionally knitted inner cushion layer 23 has a thickness of 2.5 to 3.5 mm, and has a cushioning property (elasticity) required for the airbag door 20.

The covering 25 is provided for improving the texture and the tactile sensation of the airbag door 20 and is made of artificial leather in the present embodiment. Although not illustrated, the artificial leather has a two-layer structure with a ground fabric layer and a covering layer arranged on a side of the ground fabric layer that is opposite to the inner cushion layer 23 (the upper side as viewed in Fig. 3(b)). The ground fabric layer is formed by processing a cloth of a knitted fabric of synthetic resin fibers such as polyester. The ground fabric layer may be made of any synthetic resin fiber other than polyester, for example, may be made of polyamide fiber. Instead of knitted fabric, the ground fabric may be made of a woven fabric. The covering layer forms the outer surface (ornamental surface) of the airbag door 20 and is made of, for example, polyurethane. The covering layer is bonded to the ground fabric layer. The covering 25 has a thickness of 0.3 to 1.5 mm.

The base member 21 has cleavage grooves 22 arranged in a row. In the base member 21, the part where the cleavage grooves 22 are formed is thinner than the remaining parts and has a lower breaking strength. The three-dimensionally knitted inner cushion layer 23 has cleavage grooves 24 extending therethrough at positions corresponding to the cleavage grooves 22 of the base member 21. The three-dimensionally knitted inner cushion layer 23 has a lower breaking strength at positions where the cleavage grooves 24 are formed than the remaining portions. The cleavage grooves 22, 24 are (intermittently) formed at predetermined intervals. Thin parts formed by the cleavage grooves 22, 24 and sections between adjacent cleavage grooves 22, 24 form a tear line TL.

To open the airbag door 20, the cleavage grooves 22, 24 are pressed by the airbag 12 being deployed and inflated to become starting points of breaking action of the airbag door 20. The cleavage grooves 22, 24 are provided for smoothly opening the airbag door and ensuring smooth deployment and inflation of the airbag 12. The main reason for providing the cleavage grooves 22, 24 in the base member 21 and the three-dimensionally knitted inner cushion layer 23 is that, by forming the cleavage grooves 22, 24 at positions closer to the back side than the covering 25, the cleavage grooves 22, 24 cannot be seen from the surface.

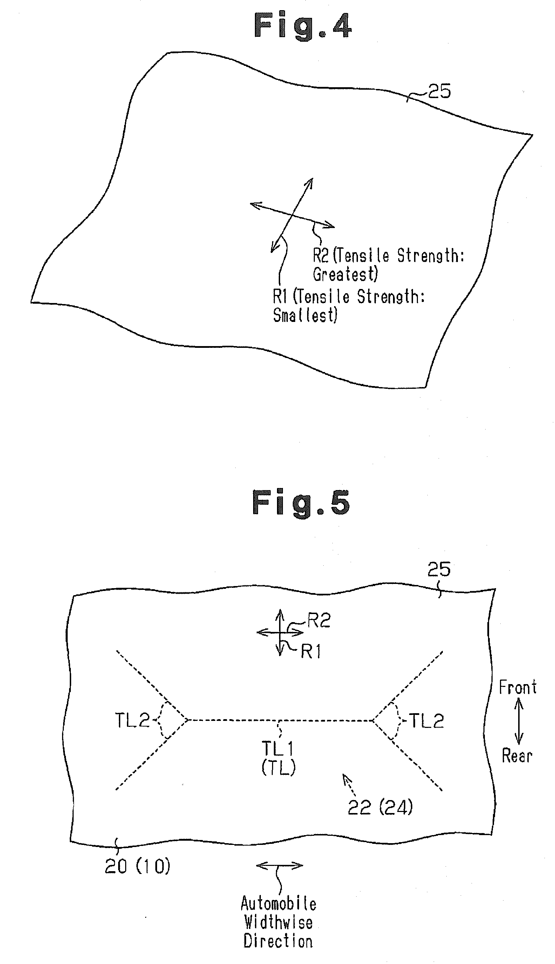

As shown in Fig. 5, the tear line TL is formed by a part extending along the width of the automobile (hereinafter referred to as a first line TL1) and parts that diagonally extend forward or rearward from the opposite ends of the first line TL1 (second lines TL2). The first line TL1 is formed by cleavage grooves 22, 24 that are arranged along the width of the automobile at predetermined intervals. The second lines TL2 are formed by cleavage grooves 22, 24 that are arranged at predetermined intervals and extend diagonally forward or rearward, toward the exterior of the automobile in the widthwise direction of the automobile.

The covering 25 has no cleavage grooves. In the present embodiment, the tear line TL is configured such that, when the airbag door 20 is pressed by the airbag 12 being deployed and inflated, the cleavage grooves 22, 24 are first broken along the first line TL1.

The structure of the airbag module AM will be schematically described. As shown in Fig. 3(a), a retainer 13 is provided on the back side of the airbag door 20. The retainer 13 holds the airbag 12 in an folded state and an inflator 14 for generating and supplying inflation gas to the airbag 12. The airbag module AM is formed by the retainer 13, the inflator 14, and the airbag 12.

The retainer 13 includes flat-plate like front and rear door portions 15, 16, which are arranged along the back side of the airbag door 20 and arranged in the front-rear direction of the automobile. The front edge of the front door portion 15 has a hinge portion 15a having a folded shape, and the rear edge of the rear door portion 16 has a hinge portion 16a having a folded shape. A flat-plate like base portion 17 extends along the back side of the airbag door 20 from each of the hinge portions 15a, 16a and away from the front door portion 15 and the rear door portion 16. A wall portion 18 extends downward from the back side of the base portion 17. The retainer 13, which has the above described structure, is made of thermoplastic olefin (TPO) by injection molding. Protrusions 19 are formed on the surfaces of the base portions 17, the front door portion 15, and the rear door portion 16 (see Fig. 3(b)). The protrusions 19 are fixed to the back of the base member 21 of the airbag door 20, for example, by vibration-welding.

Characteristic features of the present embodiment will now be described.

As shown in Fig. 3(b), the airbag door 20 has an outer cushion layer 26, which is located between the three-dimensionally knitted inner cushion layer 23 and the covering 25. The outer cushion layer 26 is formed of a material that is slightly harder than that of the three-dimensionally knitted inner cushion layer 23. For example, the outer cushion layer 26 is formed of foam of polyurethane or polypropylene (PP). The outer cushion layer 26 is soft and has connected cells and shape restoring property. Whereas the three-dimensionally knitted inner cushion layer 23 has a hardness of approximately 8 N, the outer cushion layer 26 has a hardness of approximately 14 N. These values are load values (measurement values) obtained when the layers 23, 26 receive load and are deformed by 0.5 mm. The outer cushion layer 26 has a thickness of 1.0 to 2.0 mm. The outer cushion layer 26 is bonded to the covering 25 with adhesive. Instead of adhesive bonding, the outer cushion layer 26 may be bonded to the covering 25 by flame lamination. The flame lamination is a method in which the surface of the outer cushion layer 26 is melted by flame and heat-welded to the covering 25. The outer cushion layer 26 is bonded to the base member 21 with an adhesive. Unlike the base member 21 and the three-dimensionally knitted inner cushion layer 23, which are described above, the outer cushion layer 26 has no cleavage grooves.

As shown in Fig. 4, the above described knitted fabric, which is used for forming the ground fabric layer of the covering 25, has anisotropy in the tensile strength in directions along the surface. Anisotropy refers to a physical property of the fabric being variable depending on the direction. That is, the tensile strength of the fabric is set to be the smallest in a specific direction R1 along the surface and is set to be the greatest in another direction R2, which is perpendicular to the direction R1. In contrast, the covering layer of the covering 25 has no anisotropy in the tensile strength in directions along its surface. Thus, the covering 25, which is formed by the above described ground fabric layer and covering layer, is affected by the anisotropy of the ground fabric layer and has the smallest tensile strength in the direction R1.

Further, as shown in Fig. 5, the covering 25 is laminated onto the outer cushion layer 26 such that the direction R1 of the smallest tensile strength of the ground fabric layer (the covering 25) matches with the front-rear direction of the automobile.

Unlike the covering 25, the outer cushion layer 26 has no anisotropy. The tensile strength and tear strength of the outer cushion layer 26 are not significantly high. In other words, the outer cushion layer 26 has a tensile strength and a tear strength that allow the outer cushion layer 26 to be broken without cleavage grooves when bonded to the covering 25.

In contrast, the three-dimensionally knitted inner cushion layer 23 has anisotropy. However, the anisotropy of the inner cushion layer 23 is not as high as that of the covering 25. The inner cushion layer 23 therefore has the cleavage grooves 24 as described above.

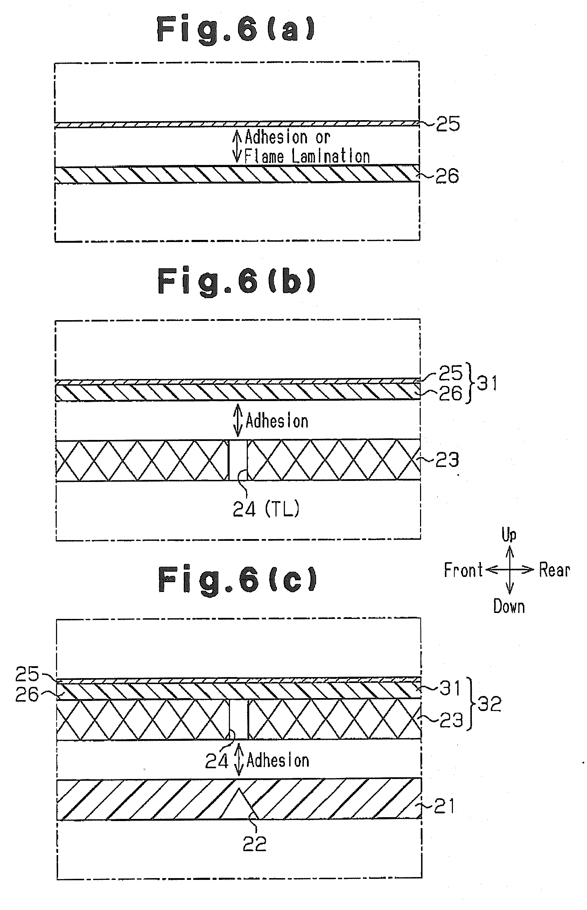

Figs. 6(a) to 6(c) show steps for manufacturing the airbag door 20. First, as shown in Fig. 6(a), the outer cushion layer 26 is boded, with adhesive or by flame lamination, to the covering 25, which is formed by laminating the ground fabric layer and the covering layer onto each other. As a result, a first intermediate 31, which is formed by laminating the covering 25 with the outer cushion layer 26, is obtained.

Next, rolled material of the three-dimensionally knitted inner cushion layer 23 is reeled out for a predetermined length, from which the shape of the product is punched out. At the same time as the punching, the inner cushion layer 23 and the cleavage grooves 24 are formed, so that a three-dimensionally knitted inner cushion layer 23 is obtained that has the shape of the product and a tear line TL.

Further, the three-dimensionally knitted inner cushion layer 23 is bonded with adhesive to the outer cushion layer 26 of the first intermediate 31 as shown in Fig. 6(b) to form a second intermediate 32, which is shown in an upper part of Fig. 6(c).

As shown in Fig. 6(c), adhesive is applied to the base member 21, which has been formed by injection molding and has the tear line TL (the cleavage grooves 22), and the second intermediate 32 is bonded onto the base member 21. As a result of the bonding, the airbag door 20, which is shown in Figs. 3(a) and 3(b), is formed.

Operation of the airbag door 20 according to the present embodiment will now be described.

When no impact, for example, due to a front collision, is being applied to the automobile, the inflator 14 of the front passenger seat airbag apparatus 11 does not eject inflation gas, and the airbag 12 is therefore not supplied with inflation gas. Thus, the airbag 12 remains folded.

Referring to Fig. 3(b), in the airbag door 20, the base member 21 functions as a core member, and the three-dimensionally knitted inner cushion layer 23 and the outer cushion layer 26 have elasticity that improves the tactile sensation. The covering 25 mainly improves the texture and the tactile sensation.

Being located between the inner cushion layer 23 and the covering 25, the outer cushion layer 26 distances the covering 25 from the inner cushion layer 23, particularly from the cleavage grooves 24. When receiving force, the outer cushion layer 26 is capable of being elastically deformed by the force. Therefore, when the temperature in the passenger compartment is raised, for example, in the hot summer sun, and the automobile airbag door 20, particularly, the inner cushion layer 23 is affected by the heat, the influence is blocked by the outer cushion layer 26, which is capable of being elastically deformed. The influence is therefore unlikely to reach the covering 25. In the covering 25, the part that corresponds to the cleavage grooves 24 of the inner cushion layer 23 is not likely to be dented, and the appearance of the covering 25 is maintained at a favorable level. Since dents are not likely to be formed in the covering 25, the covering 25 gives off the same tactile sensation when touched by the occupant P1 either at a part corresponding to the cleavage grooves 24 or the part not corresponding to the cleavage grooves 24. Accordingly, the tactile sensation of the covering 25 is maintained at a favorable level.

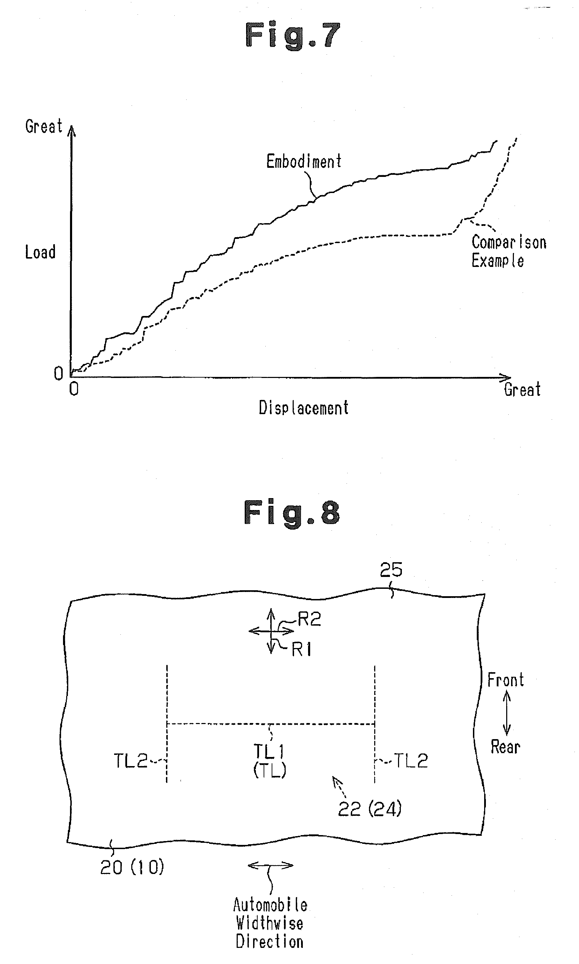

Fig. 7 shows the results of measurement of the relationship between displacement and load when the coverings 25 of airbag doors according to the embodiment and a comparison example are pressed. The comparison example is different from the embodiment in that the outer cushion layer 26 is not provided, whereas the embodiment has the outer cushion layer 26.

As shown in Fig. 7, in the comparison example, the load increases as the displacement increases in a range of small displacement. However, in a range where the displacement is greater than or equal to a certain level, the degree of increase in the load is attenuated. The attenuation is considered to be caused by the space inside the three-dimensionally knitted inner cushion layer 23. That is, when the three-dimensionally knitted inner cushion layer 23 is being deformed in a superficial portion, the load increases as the displacement increases. However, when the deformation reaches the internal space, the load is unlikely to change regardless of changes in the displacement. This means that, when the covering 25 of the airbag door 20 is pressed, the operational load increases in accordance with the increase in the displacement partway through the pressing action, but the operational load becomes hard to change after the displacement exceeds a predetermined value. This may give the occupant P1, who is pressing the airbag door 20, an awkward tactile sensation.

In contrast, according to the present embodiment, the tendency of increase in the load in accordance with increase in displacement is observed in a wide range (substantially in the entire range) of the displacement. Further, the load is greater than that in the comparison example. That is, in addition to the fact that the outer cushion layer 26 is harder than the three-dimensionally knitted inner cushion layer 23, the outer cushion layer 26 is located between the three-dimensionally knitted inner cushion layer 23 and the covering 25. Thus, the above described property of the internal space of the three-dimensionally knitted inner cushion layer 23 is canceled by the property of the outer cushion layer 26.

In this manner, in the airbag door 20 of the present embodiment, the load increases in accordance with increase in the displacement when the covering 25 is pressed. This ensures more natural tactile sensation compared with the airbag door of the comparison example.

When an impact is applied to the automobile due to a frontal collision, the inflator 14 discharges inflation gas, which is then supplied to the airbag 12. When supplied with the inflation gas, the airbag 12 is inflated while being unfolded. During the deployment and inflation, the pressing force of the airbag 12 acts on the front door portion 15 and the rear door portion 16 of the retainer 13. As indicated by broken lines in which a long dash alternates with a pair of short dashes in Fig. 3(a), the front door portion 15 of the retainer 13 acts to be opened outward while being supported at the hinge portion 15a, and the rear door portion 16 acts to be opened outward while being supported at the hinge portion 16a.

The airbag door 20 is broken by being pressed by the front door portion 15 and the rear door portion 16. At this time, the cleavage grooves 22, 24 formed in the base member 21 and the three-dimensionally knitted inner cushion layer 23 serve as the starting points of the breaking action. The base member 21 and the three-dimensionally knitted inner cushion layer 23 are broken along the cleavage grooves 22, 24. The outer cushion layer 26 and the covering 25 are broken at the parts corresponding to the cleavage grooves 22, 24 and along the cleavage grooves 22, 24.

As shown in Fig. 5, the tensile strength of the covering 25 is set to be the smallest in the direction R1 (front-rear direction), which is perpendicular to the direction in which the cleavage groove that is designed to be broken first among the cleavage grooves 22, 24 extends (direction of the first line TL1: the automobile widthwise direction). A part of the ground fabric layer (the covering 25) that corresponds to the first line TL1 is smoothly broken in the front-rear direction.

The tensile strength of the covering 25 in directions other than the direction perpendicular to the extending direction of the cleavage groove that is designed to be broken first among the cleavage grooves 22, 24 is relatively high so that the strength of the covering 25 is maintained at a favorable level.

As shown in Fig. 3 (a), the front door portion 15 and the rear door portion 16 are opened outward with the hinge portions 15a, 16a serving as fulcrums, together with the base member 21, the three-dimensionally knitted inner cushion layer 23, the outer cushion layer 26, and the covering 25, which are broken, so that the opening 33 is formed in the airbag door 20. The airbag 12 passes through the opening 33 and is deployed and inflated between the instrument panel 10 and the occupant P1 in the front passenger seat as indicated by broken lines in which a long dash alternates with a pair of short dashes in Fig. 2, thereby reducing the impact applied to the occupant P1 from the front.

The present embodiment as described above has the following advantages.
(1) The outer cushion layer 26 is located between the three-dimensionally knitted inner cushion layer 23 and the covering 25 (Fig. 3(b)).

Therefore, while ensuring the deployment performance of the airbag 12, the part of the covering 25 that corresponds to the cleavage grooves 24 of the three-dimensionally knitted inner cushion layer 23 is made to be less likely to be dented. Further, the appearance and the tactile sensation of the covering 25 are improved even under high temperature.
(2) The outer cushion layer 26 is made of a harder material than that of the inner cushion layer 23 (Fig. 3 (b)).

Thus, when the airbag door 20 is pressed from the covering 25, the load increases as the displacement increases in a wide range (substantially in the entire range) of the displacement. This provides a more natural tactile sensation.
(3) As the covering 25, a material having anisotropy in the tensile strength in directions along the surface of the covering 25 is used (Fig. 4). The covering 25 is laminated onto the outer cushion layer 26 such that the direction R1 of the smallest tensile strength of the covering 25 is perpendicular to the direction in which the cleavage groove that is designed to be broken first among the cleavage grooves 22, 24 extends (the automobile widthwise direction) (Fig. 5).

Accordingly, while ensuring the strength of the covering 25, the covering 25 can be easily broken along the cleavage grooves 22, 24 of the base member 21 and the inner cushion layer 23.

The above embodiment may be modified as follows.

### <Regarding Tear Line TL>

In the above described embodiment, the tear line TL is formed by linearly arranging a number of the short cleavage grooves 22, 24. However, the tear line TL may be formed by a single elongated cleavage groove.

In the case in which the tear line TL is formed by a number of short the cleavage grooves 22, 24 as in the above illustrated embodiment, intermittently provided thick portions remain between adjacent ones of the cleavage grooves 22, 24. This is effective in ensuring the rigidity of the tear line TL. For example, the tear line TL is not easily deformed by external factors. For example, even if the occupant P1 puts a hand on the instrument panel 10 and puts weight on the hand, the pressing force does not easily deform the tear line TL.

The tear line TL may have a shape different from that in the above illustrated embodiment (double Y-shape). For example, the tear line TL may have an H-shape as shown in Fig. 8. In this tear line TL, the second lines TL2 at the opposite ends of the first line TL1 extend in the front-rear direction of the automobile. In this case also, the covering 25 is laminated onto the outer cushion layer 26 such that the direction R1 of the smallest tensile strength of the ground fabric layer matches with the front-rear direction of the automobile.

### <Regarding Arrangement of Ground Fabric Layer (Covering 25)>

Unlike the above described embodiment, the first line TL1 may extend in the front-rear direction of the automobile. In this case, the covering 25 is preferably laminated onto the outer cushion layer 26 such that the direction R1 of the smallest tensile strength of the ground fabric layer (the covering 25) matches with the automobile widthwise direction.

The direction perpendicular to the direction in which the first line TL1 extends, that is, the front-rear direction of the automobile does not necessarily need to be completely parallel with the direction R1 in which the tensile strength of the ground fabric layer (the covering 25) is the smallest. Even if the direction R1 is slightly deviates from the direction perpendicular to the direction in which the first line TL1, an advantage similar to the advantage (3) will be achieved. The maximum allowable deviation of the direction R1 from the direction perpendicular to the direction in which the first line TL1 extends is approximately five degrees.

In a case in which the covering 25 is formed by a ground fabric layer and a covering layer, the covering layer may have anisotropy in the tensile strength in directions along its surface. In this case, the covering layer is preferably laminated onto the ground fabric layer such that the direction in which the tensile strength of the covering layer is the smallest and the direction R1 in which the tensile strength of the ground fabric layer is the smallest are matched with each other.

### <Regarding Covering 25>

Unlike the above illustrated embodiment, the covering 25 may have a single layer structure having only a covering layer, without a ground fabric layer. This modification includes a case in which real leather is used.

### <Other Modifications>

Other than the instrument panel 10, the airbag door 20 may be applied to any interior automotive trim such as a side door (door trim), a pillar (pillar garnish), a front seat, a backseat.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An automobile airbag door, which is designed to be broken by an airbag (12) being deployed and inflated, the airbag door comprising:
a base member (21);
a three-dimensionally knitted inner cushion layer (23), which is arranged on one side of the base member (21); and
a covering (25) arranged on a side of the base member (21) opposite to the inner cushion layer (23),
wherein the base member (21) and the inner cushion layer (25) each have a plurality of cleavage grooves (22, 24), which serve as starting points of breaking action when the airbag door is pressed by the airbag (12) being deployed and inflated,
the automobile airbag door being **characterized in that** an outer cushion layer (26) is located between the inner cushion layer (23) and the covering (25).

2. The automobile airbag door according to claim 1, wherein the outer cushion layer (26) is made of a harder material than that of the inner cushion layer (25).

3. The automobile airbag door according to claim 1 or 2, wherein
the covering (25) has anisotropy in the tensile strength in directions along the surface of the covering (25), and
the covering (25) is laminated onto the outer cushion layer (26) such that the direction of the smallest tensile strength of the covering (25) is perpendicular to the direction in which a cleavage groove designed to be broken first among the cleavage grooves (22, 24) extends.

4. The automobile airbag door according to any one of claims 1 to 3, wherein the outer cushion layer (26) is made of foamed plastic.

5. A front passenger seat airbag apparatus comprising:
an airbag designed to be deployed and inflated by inflation gas; and
an airbag door located in front of the airbag in the direction of deployment, wherein the airbag door is designed to be broken and opened by the airbag,
the airbag apparatus being **characterized in that**, as the airbag door, the automobile airbag door according to any one of claims 1 to 4 is employed.
